(19) Europäisches Patentamt / European Patent Office / Office européen des brevets

(11) **EP 4 576 695 A1**

(12) **EUROPEAN PATENT APPLICATION**
published in accordance with Art. 153(4) EPC

(43) Date of publication:
**25.06.2025 Bulletin 2025/26**

(21) Application number: **22961676.8**

(22) Date of filing: **11.10.2022**

(51) International Patent Classification (IPC):
*H04L 27/26* (2006.01)

(52) Cooperative Patent Classification (CPC):
**H04L 27/26**

(86) International application number:
**PCT/CN2022/124630**

(87) International publication number:
**WO 2024/077482 (18.04.2024 Gazette 2024/16)**

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**
Designated Extension States:
**BA**
Designated Validation States:
**KH MA MD TN**

(71) Applicant: **Huawei Technologies Co., Ltd.
Shenzhen, Guangdong 518129 (CN)**

(72) Inventors:
• **HUANG, Huang
  Shenzhen, Guangdong 518129 (CN)**
• **VAMEGHESTAHBANATI, Monirosharieh
  Shenzhen, Guangdong 518129 (CN)**

(74) Representative: **MERH-IP Matias Erny Reichl Hoffmann
Patentanwälte PartG mbB
Paul-Heyse-Straße 29
80336 München (DE)**

(54) **SIGNAL TRANSMISSION METHOD, AND APPARATUS**

(57) This application discloses a signal transmission method and an apparatus, to generate a pilot signal in a chirp signal form, so as to implement ISAC by using the pilot signal, and improve resource utilization. The method includes: generating a time domain ZC sequence; generating a first frequency domain pilot sequence based on the time domain ZC sequence; performing subcarrier mapping on the first frequency domain pilot sequence to obtain a first frequency domain pilot signal; performing inverse Fourier transform on the first frequency domain pilot signal to obtain a first time domain pilot signal; and sending the first time domain pilot signal. A root q of the time domain ZC sequence satisfies a first constraint condition, and the first constraint condition includes: An absolute value of q is less than or equal to a threshold, the threshold is less than $N_{ZC} - u$, $N_{ZC}$ is a length of the time domain ZC sequence, and u is a positive integer.

S401
Generate a time domain ZC sequence

S402
Generate a first frequency domain pilot sequence based on the time domain ZC sequence

S403
Perform subcarrier mapping on the first frequency domain pilot sequence to obtain a first frequency domain pilot signal

S404
Perform inverse Fourier transform on the first frequency domain pilot signal to obtain a first time domain pilot signal

S405
Send the first time domain pilot signal

FIG. 4

EP 4 576 695 A1

**Description**

TECHNICAL FIELD

This application relates to the field of communication technologies, and in particular, to a signal transmission method and an apparatus.

BACKGROUND

Integrated sensing and communication (integrated sensing and communication, ISAC) is widely considered as a key application scenario of next-generation wireless communication. Specifically, integrated sensing and communication means that a sent radio signal has both sensing and communication capabilities. Communication means that a sending end sends information to a receiving end. Sensing includes sensing a surrounding environment, a moving speed and a moving distance of an object, and the like.

A pilot signal is one of common signals in communication. How to implement ISAC by using the pilot signal and improve resource utilization is a problem to be resolved in this application.

SUMMARY

This application provides a signal transmission method and an apparatus, to generate a pilot signal in a chirp signal form, so as to implement ISAC by using the pilot signal, and improve resource utilization.

According to a first aspect, a signal transmission method is provided, including: generating a time domain ZC sequence; generating a first frequency domain pilot sequence based on the time domain ZC sequence; performing subcarrier mapping on the first frequency domain pilot sequence to obtain a first frequency domain pilot signal; performing inverse Fourier transform on the first frequency domain pilot signal to obtain a first time domain pilot signal; and sending the first time domain pilot signal. A root q of the time domain ZC sequence satisfies a first constraint condition, and the first constraint condition includes: An absolute value of q is less than or equal to a threshold, the threshold is less than $N_{ZC} - u$, $N_{ZC}$ is a length of the time domain ZC sequence, and u is a positive integer.

In this embodiment of this application, the time domain ZC sequence is generated (that is, a ZC sequence is generated in time domain), so that impact of a parameter (for example, the root q) of the ZC sequence on the first time domain pilot signal can be intuitively determined. This helps improve analog detection performance of the first time domain pilot signal (that is, the first time domain pilot signal can be as similar as possible to a chirp signal), so that ISAC can be further implemented by using the pilot signal, and resource utilization can be improved. In addition, a value of the root q of the ZC sequence (that is, the absolute value of q is less than or equal to the threshold) is constrained, so that the analog detection performance of the first time domain pilot signal can be improved (that is, a difference between the first time domain pilot signal and the chirp signal can be reduced).

Optionally, the first constraint condition includes: The absolute value of q is less than or equal to $T_q$, or the absolute value of q is a positive integer less than $T_q$, and $T_q$ is a threshold; or absolute values of q are first $M_q$ smallest values in a set of absolute values of optional q, and an absolute value of $M_q{}^{th}$ optional q in the set is the threshold. Optional q and $N_{ZC}$ are relatively prime.

Certainly, the foregoing two cases are merely examples, and an actual application is not limited thereto.

Optionally, a value of $T_q$ or $M_q$ is related to at least one of the following:

a quantity $N_d$ of subcarriers included in a transmission bandwidth, for example, a larger value of $N_d$ indicates a larger value of $T_q$ or $M_q$;
a quantity N of subcarriers corresponding to the first frequency domain pilot signal, for example, a larger value of N indicates a larger value of $T_q$ or $M_q$; and
a maximum value $T_z$ of a subcarrier mapping spacing z, for example, a larger value of $T_z$ indicates a smaller value of $T_q$ or $M_q$.

In this manner, parameter setting flexibility is improved while the analog detection performance of the first time domain pilot signal is ensured.

Optionally, the length $N_{ZC}$ of the time domain ZC sequence satisfies a second constraint condition, and the second constraint condition includes:

$$N_{ZC} = N = \frac{N_d}{z};$$

or

$$N_{ZC} = N = \frac{N_d}{z} - 1;$$

or

$N_{ZC}$ is a maximum value in all possible values that are less than or equal to N and that enable a quantity of values of optional q to be $\tilde{M}_q$, where $\tilde{M}_q$ is a positive integer, and $N = \frac{N_d}{z}$ ; or

$N_{ZC}$ is a maximum value in all possible values that are less than or equal to $\frac{N_d}{z}$ and that enable a quantity of values of optional q to be $\tilde{M}_q$, where $N_{ZC} = N$, and $\tilde{M}_q$ is a positive integer.

N is the quantity of subcarriers corresponding to the first frequency domain pilot signal, $N_d$ is the quantity of subcarriers included in the transmission bandwidth, and z is the subcarrier mapping spacing.

In this manner, a value of the length $N_{ZC}$ of the time domain ZC sequence is constrained, so that the analog detection performance of the first time domain pilot signal can be improved (that is, the difference between the first time domain pilot signal and the chirp signal can be reduced).

Optionally, the performing subcarrier mapping on the first frequency domain pilot sequence includes:

performing subcarrier mapping on the first frequency domain pilot sequence based on the subcarrier mapping spacing z.

z satisfies a third constraint condition, and the third constraint condition includes:

z is less than or equal to $T_z$, or z is a positive integer less than $T_z$.

In this manner, the subcarrier mapping spacing z is constrained, so that the analog detection performance of the first time domain pilot signal can be improved (that is, the difference between the first time domain pilot signal and the chirp signal can be reduced).

Optionally, a value of $T_z$ is related to at least one of the following:

the quantity $N_d$ of subcarriers included in the transmission bandwidth, for example, a larger value of $N_d$ indicates a larger value of $T_z$; and

an absolute value of the root q of the time domain ZC sequence, for example, a larger value of q indicates a smaller value of $T_z$.

In this manner, parameter setting flexibility is improved while the analog detection performance of the first time domain pilot signal is ensured.

Optionally, the method may further include: receiving a second time domain pilot signal, where the second time domain pilot signal is a signal obtained by transmitting the first time domain pilot signal through a channel; and determining a distance and/or a speed of a target based on the first time domain pilot signal and the second time domain pilot signal.

In this manner, ranging, speed measurement, and the like are performed by using the pilot signal, to implement ISAC.

According to a second aspect, a signal transmission method is provided, including: generating a frequency domain ZC sequence; generating a second frequency domain pilot sequence based on the frequency domain ZC sequence; performing subcarrier mapping on the second frequency domain pilot sequence to obtain a second frequency domain pilot signal; performing inverse Fourier transform on the second frequency domain pilot signal to obtain a third time domain pilot signal; and sending the third time domain pilot signal. A root q of the frequency domain ZC sequence satisfies a fourth constraint condition, and the fourth constraint condition includes: An absolute value of q enables an absolute value of $\gamma$ to be less than or equal to a threshold, $\gamma$ and q satisfy: $\gamma q = \delta N_{ZC} - 1$, $\delta$ is an integer, the threshold is less than $N_{ZC} - u$, $N_{ZC}$ is a length of the frequency domain ZC sequence, and u is a positive integer. $\gamma$ is a root of a ZC sequence obtained by performing inverse Fourier transform on the frequency domain ZC sequence.

In this embodiment of this application, a ZC sequence is generated in frequency domain (that is, a ZC sequence is constructed in frequency domain), so that a Fourier transform step of converting a time domain signal into a frequency domain signal can be omitted, and signal processing efficiency can be improved. In addition, ISAC may also be implemented by generating the ZC sequence in frequency domain, and $d_{-1}$ (a ZC sequence obtained by performing inverse Fourier transform on the frequency domain ZC sequence, that is, a time domain ZC sequence) is further constrained by constraining the root q of the frequency domain ZC sequence. This can improve analog detection performance of the third time domain pilot signal (that is, reduce a difference between the third time domain pilot signal and a chirp signal).

Optionally, when $N_{ZC} = 5$, values of q, $\delta$, and $\gamma$ may be:

$$q=1, \ \delta = 0, \text{ and } \gamma = -1;$$

or

$$q=2, \ \delta = 1, \text{ and } \gamma = 2;$$

or

$$q=3, \ \delta = -1, \text{ and } \gamma = -2;$$

or

$$q=4, \ \delta = 1, \text{ and } \gamma = 1.$$

Certainly, the foregoing is merely examples herein, and $N_{ZC}$ may have other values.

Optionally, the fourth constraint condition includes: q enables the absolute value of $\gamma$ to be less than or equal to $T_q$, or q is an integer that enables the absolute value of $\gamma$ to be less than $T_q$, and $T_q$ is the threshold; or q are first $M_q$ values that are in a set of optional q and that enable the absolute value of $\gamma$ to be smallest, an absolute value of $\gamma$ corresponding to $M_q{}^{th}$ optional q is the threshold, and the absolute value of $\gamma$ corresponding to $M_q{}^{th}$ optional q in the set is the threshold. Optional q and $N_{ZC}$ are relatively prime.

Certainly, the foregoing two cases are merely examples, and an actual application is not limited thereto.

Optionally, a value of $T_q$ or $M_q$ is related to at least one of the following:

a quantity $N_d$ of subcarriers included in a transmission bandwidth, for example, a larger value of $N_d$ indicates a larger value of $T_q$ or $M_q$;

a quantity N of subcarriers corresponding to the second frequency domain pilot signal, for example, a larger value of N indicates a larger value of $T_q$ or $M_q$; and

a maximum value $T_z$ of a subcarrier mapping spacing z, for example, a larger value of $T_z$ indicates a smaller value of $T_q$ or $M_q$.

In this manner, parameter setting flexibility is improved while analog detection performance of the third time domain pilot signal is ensured.

Optionally, the length $N_{ZC}$ of the frequency domain ZC sequence satisfies a fifth constraint condition, and the fifth constraint condition includes:

$$N_{ZC} = N = \frac{N_d}{z};$$

or

$$N_{ZC} = N = \frac{N_d}{z} - 1;$$

or

$N_{ZC}$ is a maximum value in all possible values that are less than or equal to N and that enable a quantity of values of optional q to be $\tilde{M}_q$, where $\tilde{M}_q$ is a positive integer, and $N = \frac{N_d}{z}$ ; or

$N_{ZC}$ is a maximum value in all possible values that are less than or equal to $\frac{N_d}{z}$ and that enable a quantity of values of optional q to be $\tilde{M}_q$, where $N_{ZC} = N$, and $\tilde{M}_q$ is a positive integer.

N is the quantity of subcarriers corresponding to the second frequency domain pilot signal, $N_d$ is the quantity of subcarriers included in the transmission bandwidth, and z is the subcarrier mapping spacing.

In this manner, a value of the length $N_{ZC}$ of the frequency domain ZC sequence is constrained, so that the analog detection performance of the third time domain pilot signal can be improved (that is, the difference between the third time domain pilot signal and the chirp signal can be reduced).

Optionally, the performing subcarrier mapping on the second frequency domain pilot sequence includes: performing subcarrier mapping on the second frequency domain pilot sequence based on the subcarrier mapping spacing z, where z satisfies a sixth constraint condition, and the sixth constraint condition includes:

z is less than or equal to $T_z$, or z is a positive integer less than $T_z$, and $T_z$ is the threshold.

In this manner, the subcarrier mapping spacing z is constrained, so that the analog detection performance of the third time domain pilot signal can be improved (that is, the difference between the third time domain pilot signal and the chirp signal can be reduced).

Optionally, a value of $T_z$ is related to at least one of the following:

the quantity $N_d$ of subcarriers included in the transmission bandwidth, for example, a larger value of $N_d$ indicates a larger value of $T_z$;

the root q of the frequency domain ZC sequence; and

the absolute value of $\gamma$, for example, a larger value of $\gamma$ indicates a smaller value of $T_z$.

In this manner, parameter setting flexibility is improved while the analog detection performance of the third time domain pilot signal is ensured.

Optionally, the method may further include: receiving a fourth time domain pilot signal, where the fourth time domain pilot signal is a signal obtained by transmitting the third time domain pilot signal through a channel; and determining a distance and/or a speed of a target based on the third time domain pilot signal and the fourth time domain pilot signal.

In this manner, ranging, speed measurement, and the like are performed by using the pilot signal, to implement ISAC.

According to a third aspect, a communication apparatus is provided. The apparatus includes a module, a unit, or a technical means configured to implement the method in any one of the first aspect or the optional implementations of the first aspect.

For example, the apparatus may include: a processing module, configured to: generate a time domain ZC sequence; generate a first frequency domain pilot sequence based on the time domain ZC sequence; perform subcarrier mapping on the first frequency domain pilot sequence to obtain a first frequency domain pilot signal; and perform inverse Fourier transform on the first frequency domain pilot signal to obtain a first time domain pilot signal; and a transceiver module, configured to send the first time domain pilot signal. A root q of the time domain ZC sequence satisfies a first constraint condition, and the first constraint condition includes: An absolute value of q is less than or equal to a threshold, the threshold is less than $N_{ZC} - u$, $N_{ZC}$ is a length of the time domain ZC sequence, and u is a positive integer.

According to a fourth aspect, a communication apparatus is provided. The apparatus includes a module, a unit, or a technical means configured to implement the method in any one of the second aspect or the optional implementations of the second aspect.

For example, the apparatus may include: a processing module, configured to: generate a frequency domain ZC sequence; generate a second frequency domain pilot sequence based on the frequency domain ZC sequence; perform subcarrier mapping on the second frequency domain pilot sequence to obtain a second frequency domain pilot signal; and perform inverse Fourier transform on the second frequency domain pilot signal to obtain a third time domain pilot signal; and a transceiver module, configured to send the third time domain pilot signal. A root q of the frequency domain ZC sequence satisfies a fourth constraint condition, and the fourth constraint condition includes: An absolute value of q enables an absolute value of $\gamma$ less than or equal to a threshold, $\gamma$ and q satisfy: $\gamma q = \delta N_{ZC} - 1$, $\delta$ is an integer, the threshold is less than $N_{ZC} - u$, $N_{ZC}$ is a length of the frequency domain ZC sequence, and u is a positive integer.

According to a fifth aspect, a communication apparatus is provided. The apparatus includes a processor and an interface circuit, the interface circuit is electrically coupled to the processor, and the processor performs, by using a logic circuit or by executing code instructions, the method according to any one of the first aspect or the optional implementations of the first aspect or the method according to any one of the second aspect or the optional implementations of the second aspect.

According to a sixth aspect, a computer-readable storage medium is provided. The storage medium stores a computer program or instructions, and when the computer program or the instructions are run, the method according to any one of the first aspect or the optional implementations of the first aspect is performed, or the method according to any one of the second aspect or the optional implementations of the second aspect is performed.

According to a seventh aspect, a computer program product is provided, including instructions. When the instructions are run on a computer, the method according to any one of the first aspect or the optional implementations of the first aspect is performed, or the method according to any one of the second aspect or the optional implementations of the second aspect is performed.

BRIEF DESCRIPTION OF DRAWINGS

FIG. 1 is a diagram of a frequency difference between a reflected signal and a transmitted signal;
FIG. 2 is a diagram of subcarrier mapping;
FIG. 3A to FIG. 3C are diagrams of several scenarios to which embodiments of this application may be applied;
FIG. 4 is a flowchart of a signal transmission method according to an embodiment of this application;
FIG. 5 is a flowchart of another signal transmission method according to an embodiment of this application;
FIG. 6 is a diagram of a communication apparatus according to an embodiment of this application; and
FIG. 7 is a diagram of another communication apparatus according to an embodiment of this application.

DESCRIPTION OF EMBODIMENTS

The following describes in detail embodiments of this application with reference to accompanying drawings.

Technical solutions in embodiments of this application may be applied to various communication systems, for example, a 5th generation (5th generation, 5G) communication system, a 6th generation (6th generation, 6G) communication system, another future evolved system, other systems that use wireless communication, or the like.

In embodiments of this application, "at least one" means one or more, and "a plurality of" means two or more. "And/or" describes an association relationship between associated objects and represents that three relationships may exist. For example, A and/or B may represent the following cases: Only A exists, both A and B exist, and only B exists, where A and B may be singular or plural. In the text descriptions of this application, the character "/" indicates an "or" relationship between associated objects; and in a formula in this application, the character "/" indicates a "division" relationship between associated objects. "Including at least one of A, B, and C" may represent: including A; including B; including C; including A and B; including A and C; including B and C; and including A, B, and C.

It may be understood that various numbers in embodiments of this application are merely used for differentiation for ease of description, and are not used to limit the scope of embodiments of this application. Sequence numbers do not mean execution sequences. The execution sequences of processes are determined based on functions and internal logic of the processes.

Integrated sensing and communication (Integrated sensing and communication, ISAC) is widely considered as a key application scenario of a next-generation wireless communication system (for example, a 6th generation (6th generation, 6G) communication system).

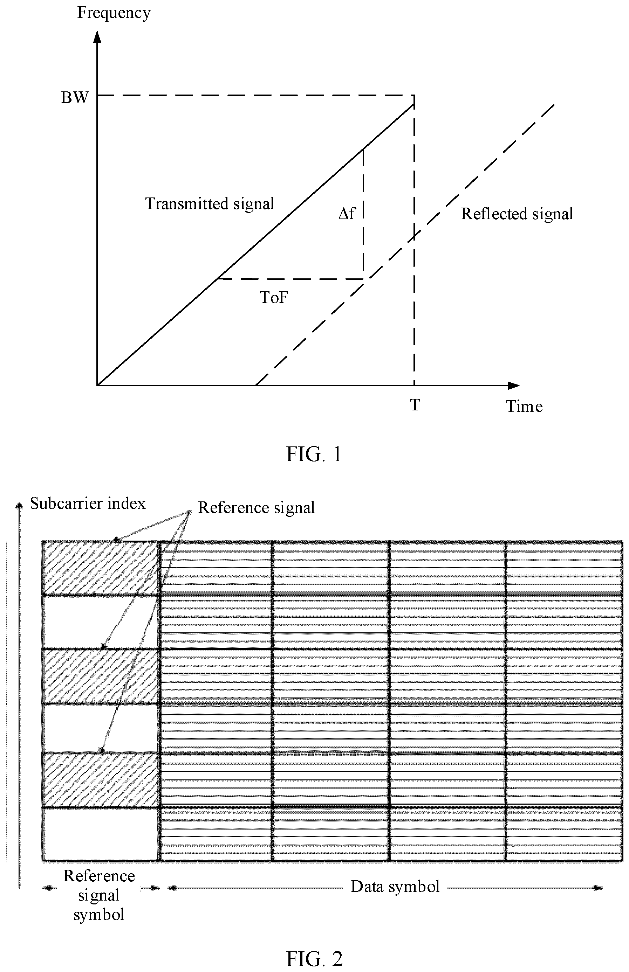

A radar is one of common sensing devices. A working principle of the radar is that a sending end sends a continuous signal (that is, a transmitted signal) whose frequency linearly increases with time, that is, a linear frequency modulated continuous wave (Frequency Modulated Continuous Wave, FMCW), which is also referred to as a chirp (chirp) signal, as shown in FIG. 1. When the transmitted signal is reflected by an object, a reflected signal is formed, and is received by the sending end. Due to a delay on a propagation path, there is a frequency difference $\Delta f$ between the reflected signal and the transmitted signal, and the frequency difference $\Delta f$ is positively correlated with a propagation delay $\tau$:

$$\Delta f \;=\; R \,\cdot\, \tau \;=\; \frac{BW}{T} \cdot \frac{2d}{c}.$$

R is a frequency change rate of the continuous frequency modulated signal, a specific value of R is a ratio of a bandwidth (Bandwidth, BW) of the continuous frequency modulated signal to a period T of the continuous frequency modulated signal, d is a distance between a target object (that is, an object that reflects a signal) and the sending end (that is, the radar), $c = 3 \cdot 10^8$ m/s and is a propagation speed of an electromagnetic wave, $BW$ is a bandwidth, and $T$ is a frequency change period.

The radar performs frequency mixing on the received reflected signal and the transmitted signal to obtain the frequency difference $\Delta f$ between the two signals, and may calculate a distance between the object and the sending end (which also is a receiving end of the reflected signal, that is, the radar) based on $\Delta f$.

$\Delta f \ll BW$, that is, a sampling rate of an analog-to-digital converter (Analog-to-Digital Converter, ADC) of a receiver does not need to be designed based on a requirement of the bandwidth BW of an entire signal, and only needs to be designed based on $\Delta f$ This greatly reduces the sampling rate of the ADC and reduces costs.

For example, if T=1 ms, and d=1 km,

$$\Delta f = \frac{BW}{T} \cdot \frac{2d}{c} = BW \cdot \frac{2}{3} \cdot 10^{-2}.$$

$\frac{2}{3} \cdot 10^{-2} \ll 1$
. Therefore, an FMCW-based linear frequency modulation signal (chirp signal) is usually used in sensing.

A pilot signal (which may also be referred to as a preamble signal, a preamble, a pilot, or the like) is one of common signals in communication.

A ZC sequence may be used in an uplink pilot design. A full name of ZC is a "Zadoff-Chu" sequence, and is also referred to as a Chu sequence or a Frank-Zadoff-Chu (FZC) sequence, which is specifically:

$$x_q(n) = e^{-\frac{j\pi qn(n+c+2p)}{N}}, \text{where } 0 \le n < N.$$

q is a root of the ZC sequence, $0 < q < N$, q and N are relatively prime, $c = N \bmod 2$, p is an integer, and N is a length (whose value is a positive integer) of the ZC sequence.

In a typical ZC sequence, N a prime number, $c = 1$, and $p = 0$, that is,

$$x_q(n) = e^{-\frac{j\pi qn(n+1)}{N}}, \text{where } 0 \le n < N.$$

It may be understood that, based on the ZC sequence, if $-N < q < 0$ is allowed, and $-q$ and N are relatively prime, the ZC sequence may also be written as:

$$x_q(n) = e^{-\frac{j\pi qn(n+c+2p)}{N}}, \text{or } x_q(n) = e^{\frac{j\pi qn(n+c+2p)}{N}}, \text{where } 0 \le n < N.$$

$0 < q < N$ or $-N < q < 0$, abs(q) and N are relatively prime, $c = N \bmod 2$, p is an integer, and N is a length (whose value is a positive integer) of the ZC sequence. abs(q) indicates a function for obtaining an absolute value of q.

When an uplink pilot is designed by using a ZC sequence, a ZC sequence may be generated in frequency domain:

$$X_q(m) = e^{-\frac{j\pi qm(m+1)}{N_{ZC}}}, \text{where } 0 \le m < N_{ZC}.$$

$N_{ZC}$ is a maximum prime number less than or equal to a quantity N of reference signals.

Then, the N reference signals are obtained through cyclic shift extension, that is,

$$\tilde{X}(n) = X_q(n \bmod N_{zc}), \text{where } 0 \le n < N.$$

Then, the N reference signals are inserted into corresponding reference signal subcarriers, for example, as shown in FIG. 2. It should be noted that, in FIG. 2, an example in which a transmission bandwidth is $N_d$ subcarriers and a reference signal is sent every other subcarrier is used, that is,

$$N = \frac{N_d}{2}.$$

Certainly, FIG. 2 is merely an example, and an actual application is not limited thereto.

Then, a time domain signal is obtained through inverse Fourier transform (for example, inverse fast Fourier transform (Inverse fast Fourier transform, IFFT) or inverse discrete Fourier transform (Inverse Discrete Fourier Transform, IDFT)), and the time domain signal is transmitted through an antenna.

$N_{ZC}$ is a prime number. Therefore, when q is any integer between 1 and $N_{ZC} - 1$, q and $N_{ZC}$ are relatively prime. A specific value of q is related to parameters such as a cell identity document (Identity document, ID), a user ID, and an ID configured by a base station.

However, the foregoing method for generating a pilot signal has at least one of the following disadvantages:

1. When performing receiving by using an analog chirp signal, a receiving end needs to use a time domain signal (for example, a slope of a frequency of the signal changes with time) that matches the transmitted signal. However, the foregoing method in which a pilot sequence is generated in frequency domain and then converted to time domain is not intuitive, and cannot directly determine a signal sent in time domain (for example, a slope of a frequency of the signal changes with time). Therefore, it is difficult for a receiver to process a received signal and learn how to select a parameter of a frequency domain pilot sequence (for example, a value of a root q of the frequency domain pilot sequence).

2. Because N is an even number in a cellular network system (for example, a long term evolution (Long Term Evolution, LTE) network system and a new radio (New Radio, NR) network system), and $N_{ZC} < N$, a time domain sequence (that is, a sequence obtained by performing IFFTH on $\tilde{X}(n)$) of the frequency domain sequence $\tilde{X}(n)$ is no longer a chirp signal due to cyclic shift extension. Consequently, a receive signal cannot be detected at the receiving end by using an analog chirp signal.

In view of at least the foregoing factors, the technical solutions in embodiments of this application are provided, to generate a pilot signal whose frequency linearly changes with time, so as to implement ISAC by using the pilot signal, and improve resource utilization.

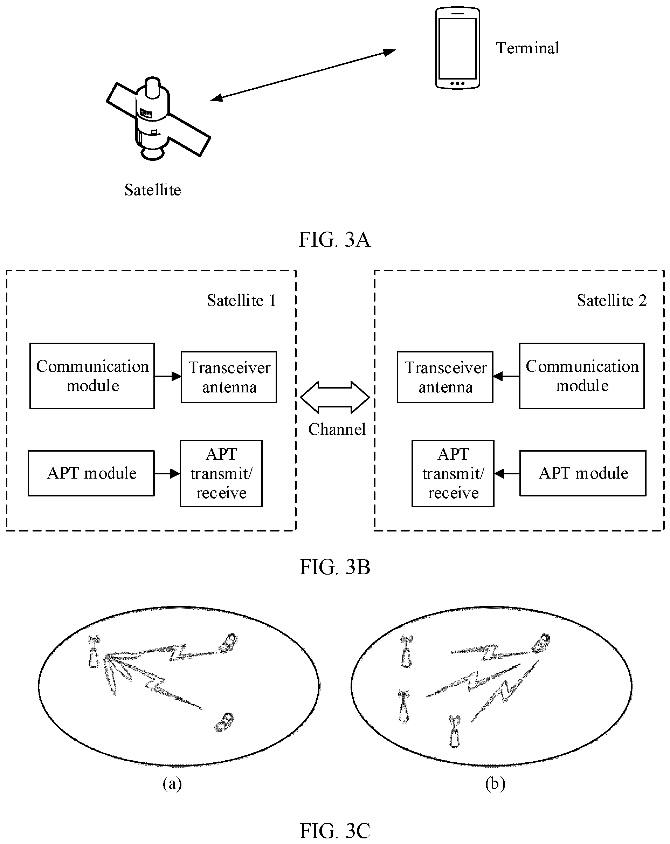

For example, refer to FIG. 3A. Embodiments of this application may be applied to a system for communication between a satellite and a terminal, and the system includes a satellite and a terminal-type network element. The satellite provides a communication service for a terminal device, and the terminal device includes but is not limited to a device such as a smartphone, a smartwatch, or a tablet computer. The satellite transmits downlink data to the terminal, and the terminal transmits uplink data to the satellite.

For example, refer to FIG. 3B. Embodiments of this application may be applied to a system for communication between satellites. A conventional inter-satellite link communication system may be divided into two parts: an acquisition, tracking, and pointing (Acquisition, Tracking, and Pointing, APT) subsystem and a communication subsystem. The communication subsystem is responsible for inter-satellite information transmission, and is a main part of the inter-satellite communication system. The APT subsystem is responsible for acquisition, pointing, and tracking between satellites. Acquisition means determining a direction of arrival of an incident signal, pointing means adjusting a transmit wave to aim at a receiving direction, and tracking means continuously adjusting pointing and acquisition in an entire communication process.

For example, refer to FIG. 3C. Embodiments of this application may be applied to a wireless communication system such as a cellular communication system or a wireless local area network communication system. In the cellular communication system, one network device may provide a service for a plurality of terminals, and one terminal may also communicate with a plurality of network devices. In the wireless local area network communication system, one access point may serve a plurality of terminals, and one terminal may also communicate with a plurality of access points.

The network device is an apparatus that is deployed in a radio access network or a wireless local area network and that provides a wireless communication function for the terminal device. The network device may include various forms of macro base stations, micro base stations (also referred to as small stations), relay stations, access points, and the like. In systems using different radio access technologies, names of the network device may be different. Alternatively, the network device may be a radio controller in a CRAN (Cloud Radio Access Network, cloud radio access network) scenario. Alternatively, the network device may be a base station device in a future 5G network or a network device in a future evolved PLMN network. The network device may alternatively be a wearable device or a vehicle-mounted device. The network device may alternatively be a transmission and reception point (Transmission and Reception Point, TRP). The network device may alternatively be an access point (access point, AP).

In addition, the terminal in this specification may also be referred to as a terminal device. The terminal may include various handheld devices, vehicle-mounted devices, wearable devices, or computing devices that have a wireless communication function, or other processing devices connected to a wireless modem. The terminal may be a mobile station (Mobile Station, MS), a subscriber unit (subscriber unit), a cellular phone (cellular phone), a smartphone (smartphone), a wireless data card, a personal digital assistant (Personal Digital Assistant, PDA for short) computer, a tablet computer, a wireless modem (modem), a handheld device (handset), a laptop computer (laptop computer), a machine type communication (Machine Type Communication, MTC) terminal, or the like.

It should be understood that the foregoing several communication systems are merely examples. In actual application, embodiments of this application may be further applied to other communication systems.

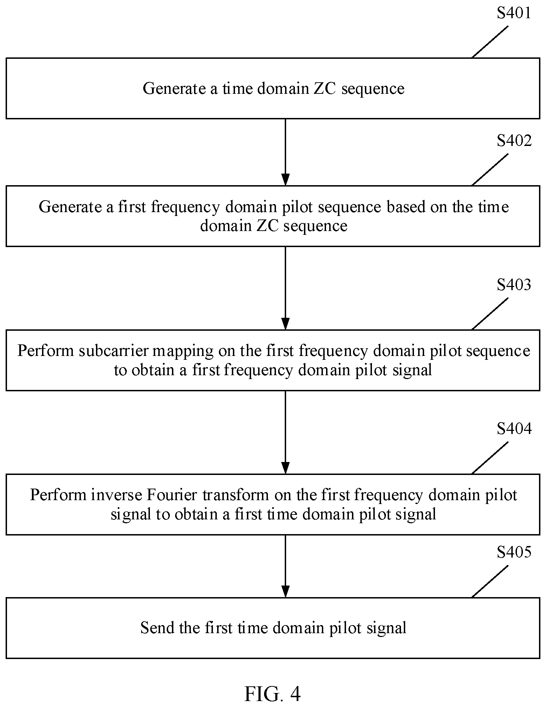

FIG. 4 is a flowchart of a signal transmission method according to an embodiment of this application. The method may be applied to any device (for example, a satellite, a base station, a terminal, or an access point) in any one of the foregoing communication systems. The method includes the following steps:

S401: Generate a time domain ZC sequence.

Specifically, a ZC sequence is constructed in time domain. In this specification, the ZC sequence constructed in time domain is referred to as the time domain ZC sequence.

For example, it is assumed that there are N reference signals, N is a positive integer, and $N_{ZC}$ time domain ZC sequences are generated:

$$x(n) = e^{-\frac{j\pi qn(n+c+2p)}{N_{ZC}}}, \text{ where } 0 \le n < N_{ZC}.$$

q is a root of the ZC sequence, $0 < q < N_{ZC}$, q and $N_{ZC}$ are relatively prime, $N_{ZC}$ is a length of the ZC sequence, a value of $N_{ZC}$ is a positive integer, c = N mod 2, p is an integer, and n is an index of the sequence x(n).

It may be understood that a quantity of sequences may also be referred to as a length of the sequence. For example, the length of the time domain ZC sequence is $N_{ZC}$. In an actual case, a signal is usually described by using a quantity, and a sequence is usually described by using a length.

Certainly, in actual application, the time domain ZC sequence may alternatively be $x(n) = e^{\frac{j\pi qn(n+c+2p)}{N_{ZC}}}$. In this case, it is required that $0 < -q < N_{ZC}$, and -q and $N_{ZC}$ are relatively prime. This is not limited in this application.

In either form, it satisfies: $0 < \text{abs}(q) < N_{ZC}$, and abs(q) and $N_{ZC}$ are relatively prime. abs(q) represents obtaining an absolute value of q.

For ease of description, an example in which the time domain ZC sequence is $x(n) = e^{-\frac{j\pi qn(n+c+2p)}{N_{ZC}}}$ is used below.

S402: Generate a first frequency domain pilot sequence based on the time domain ZC sequence.

x(n) in step S401 is still used as an example, and generating of the first frequency domain pilot sequence based on the time domain ZC sequence may include the following steps:

Perform a cyclic shift on x(n):

$$\tilde{x}(n) = x((n + a) \bmod N), \text{ where } 0 \le n < N_{ZC},$$

n is an index of the sequence $\tilde{x}(n)$, and $a$ is a positive integer.

Perform Fourier transform on $\tilde{x}(n)$ to obtain a frequency domain sequence, that is,

$$X(k) = \sum_{n=0}^{N-1} \tilde{x}(n) e^{\frac{-j2\pi kn}{N_{ZC}}}, \text{ where } 0 \le k < N_{ZC},$$

and k is an index of the sequence X (k).

If $N = N_{ZC}$, X (k) is the first frequency domain pilot sequence.

If $N > N_{ZC}$, X (k) is cyclically extended, so that a length of X(k) reaches N. If $N < N_{ZC}$, X (k) is truncated, and a length of X(k) reaches N. For example,

$$\tilde{X}(k) = X((k + b) \bmod N), \text{ where } 0 \le k < N$$

, k is an index of the sequence $\tilde{X}(k)$, and b is an integer.

Perform phase offset on $\tilde{X}(n)$ to obtain the first frequency domain pilot sequence:

$$\overline{X}(k) = \tilde{X}(k) e^{jck}, \text{ where } 0 \le k < N,$$

k is an index of the sequence $\tilde{X}(k)$, and c is a real number.

S403: Perform subcarrier mapping on the first frequency domain pilot sequence to obtain a first frequency domain pilot signal.

Specifically, the first frequency domain pilot sequence (for example, $\overline{X}(k)$) is mapped to N subcarriers by using a mapping function. The mapping function is, for example, f(l), $l \in \Phi$, where $0 \le f(l) < N$.

It is assumed that a transmission bandwidth is $N_d$ subcarriers, subcarrier mapping may be performed on the first frequency domain pilot sequence based on a subcarrier mapping spacing z, that is, one reference signal is placed on every z subcarriers. z is a positive integer that can be divisible by $N_d$. For example, when z = 1, a reference signal is continuously placed on each subcarrier; and when z = 2, one reference signal is placed on every two subcarriers. It can be learned that the quantity N of reference signals satisfies:

$$N \leq \frac{N_d}{z}.$$

The reference signal includes but is not limited to one or more of a channel state information reference signal (Channel State Information Reference Signal, CSI-RS), a sounding reference signal (Sounding Reference Signal, SRS), a demodulation reference signal (Demodulation Reference Signal, DMRS), a phase tracking reference signal (Phase Tracking Reference Signal, PT-RS), a tracking reference signal (Tracking Reference Signal, T-RS), or a positioning reference signal (Positioning Reference Signal, PRS).

S404: Perform inverse Fourier transform on the first frequency domain pilot signal to obtain a first time domain pilot signal.

For example, L-point inverse Fourier transform (or Fourier transform with a length or a size of L) is performed, where L≥N, to obtain the first time domain pilot signal:

$$r(n) = \sum_{l \in \Phi} W(l) \cdot \overline{X}(\mathrm{f}(l)) e^{\frac{j2\pi}{L} nl} .$$

r(n) is a digital discrete time domain signal, n is an integer, f(l) is an index of a $\overline{X}(k)$ sequence corresponding to an $l^{th}$ subcarrier, $\Phi$ is a set of reference signal subcarriers, and $W(l)$ is a weighting coefficient on the $l^{th}$ subcarrier.

S405: Send the first time domain pilot signal.

Optionally, a cyclic prefix (Cyclic Prefix, CP) may be further added to the first time domain pilot signal, and the first time domain pilot signal having the CP is sent.

It may be understood that, when the first time domain pilot signal is represented by using an analog continuous time domain signal, the first time domain pilot signal may also be represented as:

$$r(t) = \sum_{l \in \Phi} W(l) \cdot \overline{X}(\mathrm{f}(l)) e^{j2\pi l \Delta f t} .$$

Time t ∈ [$T_0$, $T_{end}$] (unit: second) is start time and end time of the signal, and $\Delta f$ (unit: Hz) is a subcarrier width.

Values of a, b, c, and $\Phi$ may be configured by a network device, or may be related to an identifier of a terminal device. Some possible values of f(l) are f(l) = l - $l_0$, $\Phi = \{l_0, \ldots, l_0 + N - 1\}$, where $l_0$ is an integer. When the first time domain pilot signal is represented by using an analog continuous time domain signal, $l_0 \geq 0$. This is convenient to express an index of a subcarrier. When the first time domain pilot signal is represented by using a digital discrete time domain signal, because $e^{\frac{j2\pi}{L} nl} = e^{\frac{j2\pi}{L} n(l+vL)}$, where v is any integer, $l_0$, may be a negative integer, 0, or a positive integer. Generally, for convenience of digital signal processing, L is an even number, and the sequence $\overline{X}(k)$ is continuously mapped to a subcarrier interval $\left[-\frac{L}{2}, \frac{L}{2}\right)$ or $\left(-\frac{L}{2}, \frac{L}{2}\right]$. Therefore, the following constraints: $l_0 + N - 1 \leq \frac{L}{2}$ or $\frac{L}{2} - 1$, and $l_0 \geq -\frac{L}{2}$ or $-\frac{L}{2} + 1$ may be further implemented.

In the foregoing solution, the ZC sequence is generated in time domain, so that impact of a parameter (for example, the root q and $N_{ZC}$ of the ZC sequence) on the first time domain pilot signal can be intuitively determined. This helps improve analog detection performance of the first time domain pilot signal (that is, the first time domain pilot signal can be as similar as possible to a chirp signal), so that ISAC can be further implemented by using the pilot signal, and resource utilization can be improved.

For example, ISAC is implemented by using the pilot signal. After S405, a second time domain pilot signal may be further received, where the second time domain pilot signal is a signal obtained by transmitting the first time domain pilot signal through a channel; and a distance and/or a speed of a target are/is determined based on the first time domain pilot signal and the second time domain pilot signal. For example, the distance of the target is determined based on a frequency difference determined based on the first time domain pilot signal and the second time domain pilot signal.

It may be understood that a larger absolute value of the root (namely, q) of the time domain ZC sequence indicates a larger difference between an ideal chirp signal and finally obtained first time domain pilot signals r(n) and r(t). Consequently, performance of a receiver deteriorates. Therefore, in this embodiment of this application, a value range of q is constrained, to improve the analog detection performance of the first time domain pilot signal.

In a possible design, q satisfies a first constraint condition, and the first constraint condition includes: The absolute value of q is less than or equal to a threshold, the threshold is less than $N_{ZC} - u$, $N_{ZC}$ is the length of the time domain ZC sequence, and u is a positive integer.

For example, the first constraint condition includes: The absolute value of q is less than or equal to $T_q$, or the absolute value of q is a positive integer less than $T_q$. Correspondingly, $T_q$ is the threshold.

For example, absolute values of q are first $M_q$ smallest values in a set of absolute values of optional q. Correspondingly, an absolute value of $M_q{}^{th}$ optional q in the set is the threshold.

Optional q and $N_{ZC}$ are relatively prime. For example, the set of the absolute values of optional q is a set including all possible absolute values of q that are relatively prime to $N_{ZC}$.

Certainly, the first constraint condition is not limited to the foregoing two examples.

During specific implementation, a value of $T_q$ or $M_q$ may be configured by a base station or agreed on between a sending device and a receiving device. This is not limited in this application.

Optionally, the value of $T_q$ or $M_q$ is related to at least one of the following:

(1) A quantity $N_d$ of subcarriers included in a transmission bandwidth.

A larger value of $N_d$ indicates less distortion caused by $abs(q) > 1$. Therefore, a larger value of the absolute value of q can be tolerated. Therefore, a larger value of $N_d$ indicates a larger value of $T_q$ or $M_q$.

For example, $N_d = n_1$ corresponds to $T_q = t_1$, $N_d = n_2$ corresponds to $T_q = t_2$, and if $n_1 \leq n_2$, $t_1 \leq t_2$. Alternatively, $N_d = n_1$ corresponds to $M_q = t_1$, $N_d = n_2$ corresponds to $M_q = t_2$, and if $n_1 \leq n_2$, $t_1 \leq t_2$.

(2) A quantity N of subcarriers (that is, a quantity of reference signals) corresponding to the first frequency domain pilot signal.

A larger value of N indicates less distortion caused by $abs(q) > 1$. Therefore, a larger value of the absolute value of q can be tolerated. Therefore, a larger value of N indicates a larger value of $T_q$ or $M_q$.

For example, $N = n_1$ corresponds to $T_q = t_1$, $N = n_2$ corresponds to $T_q = t_2$, and if $n_1 \leq n_2$, $t_1 \leq t_2$. Alternatively, $N = n_1$ corresponds to $M_q = t_1$, $N = n_2$ corresponds to $M_q = t_2$, and if $n_1 \leq n_2$, $t_1 \leq t_2$.

(3) A maximum value $T_z$ of the subcarrier mapping spacing z.

A smaller value of $T_z$ indicates less distortion caused by $abs(q) > 1$. Therefore, a larger value of the absolute value of q can be tolerated. Therefore, a larger value of $T_z$ indicates a smaller value of $T_q$ or $M_q$.

For example, $T_q = q_1$ corresponds to $T_z = t_1$, $T_q = q_2$ corresponds to $T_z = t_2$, and if $t_1 \leq t_2$, $abs(q_1) \geq abs(q_2)$. Alternatively, $M_q = q_1$ corresponds to $T_z = t_1$, $M_q = q_2$ corresponds to $T_z = t_2$, and if $t_1 \leq t_2$, $abs(q_1) \geq abs(q_2)$.

In this embodiment of this application, the value of the root q of the ZC sequence is constrained, so that the analog detection performance of the first time domain pilot signal can be improved (that is, the difference between the first time domain pilot signal and the chirp signal can be reduced), thereby helping implement ISAC by using the pilot signal, and improving resource utilization.

It may be understood that a larger difference between N and $N_{ZC}$ while $N_{ZC}$ is less than N indicates a larger difference between the chirp signal and the finally obtained first time domain pilot signals $r(n)$ and $r(t)$. Consequently, the performance of the receiver deteriorates. Therefore, in this embodiment of this application, a value of $N_{ZC}$ may be further constrained, to improve the analog detection performance of the first time domain pilot signal.

In a possible design, the length $N_{ZC}$ of the time domain ZC sequence satisfies a second constraint condition, and the second constraint condition may be any one of the following:

(1) $N_{ZC}$ is a maximum prime number less than or equal to N, where $N = \dfrac{N_d}{z}$. Alternatively, this may be described as that N is a maximum prime number less than or equal to $\dfrac{N_d}{z}$, where $N_{ZC} = N$. $N_{ZC}$ and the absolute value of the root q of the time domain ZC sequence are relatively prime.

In this manner, values of optional q may be as many as possible.

$$N_{ZC} = N = \frac{N_d}{z}.$$

In this manner, distortion of the first time domain pilot signal can be as small as possible.

$$N_{ZC} = N = \frac{N_d}{z} - 1.$$

Because $\frac{N_d}{z}$ is usually an even number, in this manner, distortion caused by $N_{ZC}$ can be minimized, and $N_{ZC}$ is set to an odd number, so that values of optional q are as many as possible.

(4) $N_{ZC}$ is a maximum value in all possible values that are less than or equal to N and that enable a quantity of values of optional q to be $\tilde{M}_q$, where $\tilde{M}_q$ is a positive integer, and $N = \frac{N_d}{z}$.

In this manner, the quantity of values of optional q may be $\tilde{M}_q$. A value of $\tilde{M}_q$ may be configured by a base station or agreed on by a signal receiving party and a signal sending party. Optionally, $\tilde{M}_q$ is equal to $M_q$.

(5) $N_{ZC}$ is a maximum value in all possible values that are less than or equal to $\frac{N_d}{z}$ and that enable a quantity of values of optional q to be $\tilde{M}_q$, where $N_{ZC} = N$, and $\tilde{M}_q$ is a positive integer.

In this manner, the quantity of values of optional q may be $\tilde{M}_q$. A value of $\tilde{M}_q$ may be configured by a base station or agreed on by a signal receiving party and a signal sending party. Optionally, $\tilde{M}_q$ is equal to $M_q$.

In this embodiment of this application, a value of the length $N_{ZC}$ of the ZC sequence is constrained, so that the analog detection performance of the first time domain pilot signal can be improved (that is, the difference between the first time domain pilot signal and the chirp signal can be reduced), thereby helping implement ISAC by using the pilot signal, and improving resource utilization.

It may be understood that a larger subcarrier mapping spacing (namely, z) indicates a larger difference between the ideal chirp signal and the finally obtained first time domain pilot signals $r(n)$ and $r(t)$. Consequently, the performance of the receiver deteriorates. Therefore, in this embodiment of this application, a value of z may be further constrained, to improve the analog detection performance of the first time domain pilot signal.

In a possible design, z satisfies a third constraint condition, and the third constraint condition may be any one of the following:

(1) z is less than or equal to $T_z$; and
(2) z is a positive integer less than $T_z$.

During specific implementation, a value of $T_z$ may be configured by a base station or agreed on by a signal receiving party and a signal sending party.

Optionally, the value of $T_z$ may be related to at least one of the following:

(1) The quantity $N_d$ of subcarriers included in the transmission bandwidth.

A larger value of $N_d$ indicates less distortion caused by $T_z > 1$. Therefore, a larger value of $T_z$ can be tolerated. Therefore, a larger value of $N_d$ indicates a larger value of $T_z$.

For example, $N_d = n_1$ corresponds to $T_z = t_1$, $N_d = n_2$ corresponds to $T_z = t_2$, and if $n_1 \leq n_2$, $t_1 \leq t_2$.

(2) The absolute value of the root q of the time domain ZC sequence.

A smaller absolute value of q indicates less distortion caused by $T_z > 1$. Therefore, a larger value of $T_z$ can be tolerated. Therefore, a larger value of q indicates a smaller value of $T_z$.

For example, abs(q) = $q_1$ corresponds to $T_z = t_1$, abs(q) = $q_2$ corresponds to $T_z = t_2$, and if $q_1 \geq q_2$, $t_1 \leq t_2$.

In this embodiment of this application, the subcarrier mapping spacing z is constrained, so that the analog detection performance of the first time domain pilot signal can be improved (that is, the difference between the first time domain pilot signal and the chirp signal can be reduced), thereby helping implement ISAC by using the pilot signal, and improving resource utilization.

The foregoing describes a method for constructing the ZC sequence in time domain to generate the pilot signal, and the following describes a method for generating a ZC sequence in frequency domain to generate a pilot signal.

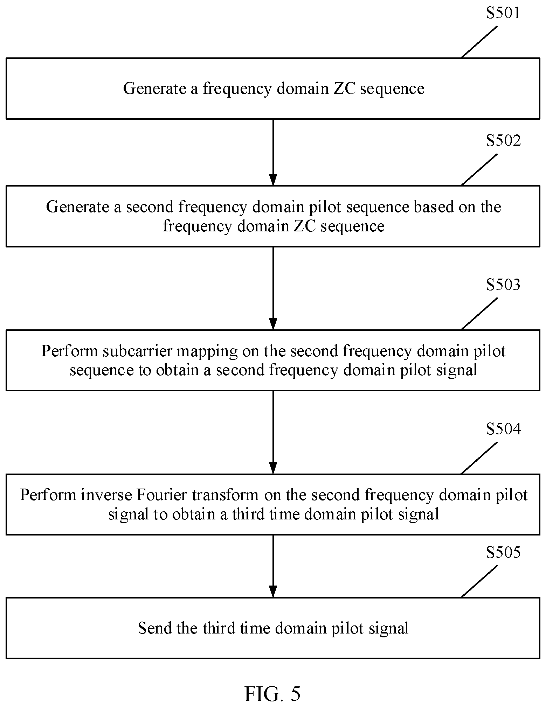

FIG. 5 is a flowchart of another signal transmission method according to an embodiment of this application. The method may be applied to any device (for example, a satellite, a base station, a terminal, or an access point) in any one of the foregoing communication systems. The method includes the following steps:

S501: Generate a frequency domain ZC sequence.

Specifically, a ZC sequence is constructed in frequency domain. In this specification, the ZC sequence constructed in frequency domain is referred to as the frequency domain ZC sequence.

For example, it is assumed that there are N reference signals, N is a positive integer, and $N_{ZC}$ ($N_{ZC} \leq N$) frequency domain ZC sequences (that is, a frequency domain ZC sequence with a length of $N_{ZC}$) are generated:

$$X(k) = e^{-\frac{j\pi qk(k+c+2p)}{N_{ZC}}}, \text{where } 0 \le k < N_{ZC}.$$

k is an index of the sequence X(k), q is a root of the ZC sequence, $0 < q < N_{ZC}$, q and $N_{ZC}$ are relatively prime, $N_{ZC}$ is a length of the ZC sequence, a value of $N_{ZC}$ is a positive integer, $c = N \bmod 2$, and p is an integer.

Certainly, in actual application, the frequency domain ZC sequence may alternatively be

$$X(k) = e^{\frac{j\pi qk(k+c+2p)}{N_{ZC}}}$$
. In this case, it is required that $0 < -q < N_{ZC}$, and -q and $N_{ZC}$ are relatively prime. This is not limited in this application.

In either form, it satisfies: $0 < \text{abs}(q) < N_{ZC}$, and abs(q) and $N_{ZC}$ are relatively prime. abs(q) represents obtaining an absolute value of q.

For ease of description, an example in which the frequency domain ZC sequence is $X(k) = e^{-\frac{j\pi qk(k+c+2p)}{N_{ZC}}}$ is used below.

S502: Generate a second frequency domain pilot sequence based on the frequency domain ZC sequence.

For example, if $N_{ZC} < N$, X(k) is cyclically extended to N, and if $N_{ZC} > N$, X(k) is truncated to N. For example,

$$\tilde{X}(k) = X((k + \alpha) \bmod N), \text{where } 0 \le k < N,$$

k is an index of the $\tilde{X}(k)$ sequence, and $\alpha$ is an integer.

Perform phase offset on $\tilde{X}(k)$ to obtain the second frequency domain pilot sequence:

$$\overline{X}(k) = \tilde{X}(k)e^{j\beta k}, \text{where } 0 \le k < N,$$

k is an index of the sequence $\tilde{X}(k)$, and $\beta$ is a real number.

S503: Perform subcarrier mapping on the second frequency domain pilot sequence to obtain a second frequency domain pilot signal.

Specifically, the second frequency domain pilot sequence (for example, $\overline{X}(k)$) is mapped to $N$ subcarriers. It is assumed that a transmission bandwidth is $N_d$ subcarriers, subcarrier mapping may be performed on the second frequency domain pilot sequence based on a subcarrier mapping spacing z. For this step, refer to S403. Details are not described herein again.

S504: Perform inverse Fourier transform on the second frequency domain pilot signal to obtain a third time domain pilot signal.

For example, L-point inverse Fourier transform is performed to obtain the third time domain pilot signal:

$$r(n) = \sum_{l \in \Phi} W(l) \cdot \overline{X}(f(l))e^{\frac{j2\pi}{L}nl},$$

where $\Phi$ is a set of reference signal subcarriers, n is an integer, $f(l)$ is an index of a sequence $\overline{X}(k)$ corresponding to an $l$th subcarrier, and $W(l)$ is a weighting coefficient on the $l$th subcarrier.

S505: Send the third time domain pilot signal.

Optionally, a CP may be further added to the third time domain pilot signal, and the third time domain pilot signal having the CP is sent.

Similarly, it may be understood that the third time domain pilot signal may also be represented by using an analog continuous time domain signal. For details, refer to related content of S405. Details are not described herein again.

In the foregoing solution, the ZC sequence is generated in frequency domain, steps are simple, and a step of performing Fourier transform to convert a time domain signal into a frequency domain signal is omitted, so that signal processing efficiency can be improved. In addition, ISAC may also be implemented by generating the ZC sequence in frequency domain. For example, after S505, ISAC may be further implemented by using a pilot signal as an example. After S405, a fourth time domain pilot signal may be further received, where the fourth time domain pilot signal is a signal obtained by transmitting the third time domain pilot signal through a channel; and a distance and/or a speed of a target are/is determined based on the third time domain pilot signal and the fourth time domain pilot signal. For example, the distance of the target is determined based on a frequency difference determined based on the third time domain pilot signal and the fourth time domain pilot signal.

In this embodiment of this application, a time domain sequence obtained by performing inverse Fourier transform on X(k) is:

$$x(n) = \sum_{k=0}^{N-1} X(k)e^{\frac{j2\pi kn}{N}} = A \underbrace{e^{\frac{-j\pi\gamma n(n+(c+2p))}{N}}}_{x_\gamma(n)} e^{j\theta}.$$

It can be learned that $x(n)$ is obtained by multiplying a time domain ZC sequence $x_\gamma$(n) whose root is $\gamma$ by a phase offset $\theta$. A receiver may compensate for the phase offset without performance loss.

The root q of the frequency domain ZC sequence X(k) and a root $\gamma$ of the time domain ZC sequence $x_\gamma$(n) satisfy: $\gamma q = \delta N_{ZC} - 1$, where $\delta$ is a positive integer, and examples of values of $\delta$ are shown in Table 1.

Table 1

| $N_{ZC} = 5$ | | |
|---|---|---|
| **q** | $\delta$ | $\gamma$ |
| 1 | 0 | -1 |
| 2 | 1 | 2 |
| 3 | -1 | -2 |
| 4 | 1 | 1 |

It may be understood that a larger absolute value of the root (namely, $\gamma$) of the time domain ZC sequence indicates a larger difference between the third time domain pilot signal and an ideal chirp signal. Consequently, performance of the receiver deteriorates. However, there is a correspondence (namely, $\gamma q = \delta N_{ZC} - 1$) between the root q of the frequency domain ZC sequence X(k) and the root $\gamma$ of the time domain ZC sequence $x_\gamma$(n). Therefore, in this embodiment of this application, a value range of q may be constrained to constrain $\gamma$, to improve analog detection performance of the third time domain pilot signal.

In a possible design, the root q of the frequency domain ZC sequence satisfies a fourth constraint condition, and the fourth constraint condition includes: The absolute value of q enables an absolute value of $\gamma$ to be less than or equal to a threshold, $\gamma$ and q satisfy: $\gamma q = \delta N_{ZC} - 1$, $\delta$ is an integer, the threshold is less than $N_{ZC} - u$, $N_{ZC}$ is a length of the frequency domain ZC sequence, and u is a positive integer.

For example, the fourth constraint condition includes: q enables the absolute value of $\gamma$ to be less than or equal to $T_q$, or q is an integer that enables the absolute value of $\gamma$ to be less than $T_q$, and $T_q$ is the threshold.

For example, the fourth constraint condition includes: q are first $M_q$ values that are in a set of optional q and that enable the absolute value of $\gamma$ to be smallest, an absolute value of $\gamma$ corresponding to Mq[th] optional q is the threshold, and the absolute value of $\gamma$ corresponding to $M_q$[th] optional q in the set is the threshold. Optional q and $N_{ZC}$ are relatively prime.

Optional q and $N_{ZC}$ are relatively prime. For example, the set of the absolute values of optional q is a set including all possible absolute values of q that are relatively prime to $N_{ZC}$.

Certainly, the fourth constraint condition is not limited to the foregoing two examples.

During specific implementation, a value of $T_q$ or $M_q$ may be configured by a base station or agreed on between a sending device and a receiving device. This is not limited in this application.

Optionally, the value of $T_q$ or $M_q$ is related to at least one of the following:

(1) A quantity $N_d$ of subcarriers included in a transmission bandwidth.

A larger value of $N_d$ indicates less distortion caused by abs($\gamma$) > 1. Therefore, a larger absolute value of $\gamma$ can be tolerated. Therefore, a larger value of $N_d$ indicates a larger value of $T_q$ or $M_q$.

For example, $N_d = n_1$ corresponds to $T_q = t_1$, $N_d = n_2$ corresponds to $T_q = t_2$, and if $n_1 \le n_2$, $t_1 \le t_2$. Alternatively, $N_d = n_1$ corresponds to $M_q = t_1$, $N_d = n_2$ corresponds to $M_q = t_2$, and if $n_1 \le n_2$, $t_1 \le t_2$.

(2) A quantity N of subcarriers corresponding to the second frequency domain pilot signal.

A larger value of N indicates less distortion caused by abs($\gamma$) > 1. Therefore, a larger absolute value of $\gamma$ can be tolerated. Therefore, a larger value of N indicates a larger value of $T_q$ or $M_q$.

For example, $N = n_1$ corresponds to $T_q = t_1$, $N = n_2$ corresponds to $T_q = t_2$, and if $n_1 \le n_2$, $t_1 \le t_2$. Alternatively, $N = n_1$ corresponds to $M_q = t_1$, $N = n_2$ corresponds to $M_q = t_2$, and if $n_1 \le n_2$, $t_1 \le t_2$.

(3) A maximum value $T_z$ of a subcarrier mapping spacing z.

A smaller value of $T_z$ indicates less distortion caused by $abs(\gamma) > 1$. Therefore, a larger absolute value of $\gamma$ can be tolerated. Therefore, a larger value of $T_z$ indicates a smaller value of $T_q$ or $M_q$.

For example, $T_q = q_1$ corresponds to $T_z = t_1$, $T_q = q_2$ corresponds to $T_z = t_2$, $q = q_1$ corresponds to $\gamma = d_1$, and $q = q_2$ corresponds to $\gamma = d_2$. If $t_1 \le t_2$, $abs(d_1) \ge abs(d_2)$. Alternatively, $M_q = q_1$ corresponds to $T_z = t_1$, $M_q = q_2$ corresponds to $T_z = t_2$, and if $t_1 \le t_2$, $abs(d_1) \ge abs(d_2)$.

In this embodiment of this application, the root $\gamma$ of the time domain ZC sequence may be constrained by constraining the value of the root q of the frequency domain ZC sequence, so that the analog detection performance of the third time domain pilot signal can be improved (that is, the difference between the third time domain pilot signal and the chirp signal can be reduced), thereby helping implement ISAC by using the pilot signal, and improving resource utilization.

It may be understood that a larger difference between N and $N_{ZC}$ while $N_{ZC}$ is less than N indicates a larger difference between the finally obtained third time domain pilot signal and the chirp signal. Consequently, the performance of the receiver deteriorates. Therefore, in this embodiment of this application, a value of $N_{ZC}$ may be further constrained, to improve the analog detection performance of the third time domain pilot signal.

In a possible design, the length $N_{ZC}$ of the time domain ZC sequence satisfies a fifth constraint condition, and the fifth constraint condition may be any one of the following:

*(1) $N_{ZC}$* is a maximum prime number less than or equal to *N,* where $N = \frac{N_d}{z}$. Alternatively, this may be described as that *N* is a maximum prime number less than or equal to $\frac{N_d}{z}$, where $N_{ZC} = N$. $N_{ZC}$ and the absolute value of the root q of the time domain ZC sequence are relatively prime.

In this manner, values of optional q may be as many as possible.

$$N_{ZC} = N = \frac{N_d}{z}.$$

In this manner, distortion of the third time domain pilot signal can be as small as possible.

$$N_{ZC} = N = \frac{N_d}{z} - 1.$$

Because $\frac{N_d}{z}$ is usually an even number, in this manner, distortion caused by $N_{ZC}$ can be minimized, and $N_{ZC}$ is set to an odd number, so that values of optional q are as many as possible.

(4) $N_{ZC}$ is a maximum value in all possible values that are less than or equal to N and that enable a quantity of values of optional q to be $\tilde{M}_q$, where $\tilde{M}_q$ is a positive integer, and $N = \frac{N_d}{z}$.

In this manner, the quantity of values of optional q may be $\tilde{M}_q$. A value of $\tilde{M}_q$ may be configured by a base station or agreed on by a signal receiving party and a signal sending party. Optionally, $\tilde{M}_q$ is equal to $M_q$.

(5) $N_{ZC}$ is a maximum value in all possible values that are less than or equal to $\frac{N_d}{z}$ and that enable a quantity of values of optional q to be $\tilde{M}_q$, where $N_{ZC} = N$, and $\tilde{M}_q$ is a positive integer.

In this manner, the quantity of values of optional q may be $\tilde{M}_q$. A value of $\tilde{M}_q$ may be configured by a base station or agreed on by a signal receiving party and a signal sending party. Optionally, $\tilde{M}_q$ is equal to $M_q$.

In this embodiment of this application, the value of the length $N_{ZC}$ of the ZC sequence is constrained, so that the analog detection performance of the third time domain pilot signal can be improved (that is, the difference between the third time domain pilot signal and the chirp signal can be reduced), thereby helping implement ISAC by using the pilot signal, and improving resource utilization.

It may be understood that a larger subcarrier mapping spacing (namely, z) indicates a larger difference between the finally obtained third time domain pilot signal and the ideal chirp signal. Consequently, the performance of the receiver deteriorates. Therefore, in this embodiment of this application, a value of z may be further constrained, to improve the analog detection performance of the third time domain pilot signal.

In a possible design, z satisfies a sixth constraint condition, and the sixth constraint condition may be any one of the following:

(1) z is less than or equal to $T_z$; and

(2) z is a positive integer less than $T_z$.

During specific implementation, a value of $T_z$ may be configured by a base station or agreed on by a signal receiving party and a signal sending party.

Optionally, the value of $T_z$ may be related to at least one of the following:

(1) The quantity $N_d$ of subcarriers included in the transmission bandwidth.

A larger value of $N_d$ indicates less distortion caused by $T_z > 1$. Therefore, a larger value of $T_z$ can be tolerated. Therefore, a larger value of $N_d$ indicates a larger value of $T_z$.

For example, $N_d = n_1$ corresponds to $T_z = t_1$, $N_d = n_2$ corresponds to $T_z = t_2$, and if $n_1 \leq n_2$, $t_1 \leq t_2$.

(2) The root q of the frequency domain ZC sequence.

A smaller absolute value of q indicates less distortion caused by $T_z > 1$. Therefore, a larger value of $T_z$ can be tolerated. Therefore, a larger value of q indicates a smaller value of $T_z$.

For example, abs(q) = $q_1$ corresponds to $T_z = t_1$, abs(q) = $q_2$ corresponds to $T_z = t_2$, and if $q_1 \geq q_2$, $t_1 \leq t_2$.

(3) The absolute value of the root $\gamma$ of the time domain ZC sequence.

A smaller value of $\gamma$ indicates less distortion caused by $T_z > 1$. Therefore, a larger value of $T_z$ can be tolerated. Therefore, a larger value of $\gamma$ indicates a smaller value of $T_z$.

For example, q = $q_1$ corresponds to $\gamma = d_1$, $T_z = t_1$, q = $q_2$ corresponds to $\gamma = d_2$, $T_z = t_2$ and if abs($d_1$) $\geq$ abs($d_2$), $t_1 \leq t_2$.

In this embodiment of this application, the subcarrier mapping spacing z is constrained, so that the analog detection performance of the third time domain pilot signal can be improved (that is, the difference between the third time domain pilot signal and the chirp signal can be reduced), thereby helping implement ISAC by using the pilot signal, and improving resource utilization.

Based on a same technical idea, an embodiment of this application provides a communication apparatus 600. The apparatus 600 may be, for example, a satellite, a base station, a terminal, an access point, or a chip inside a satellite, a base station, a terminal, or an access point. The apparatus 600 includes corresponding modules, units, or means (means) for performing the method steps in the embodiment shown in FIG. 4 or FIG. 5. The functions, units, or means may be implemented by software, may be implemented by hardware, or may be implemented by hardware executing corresponding software.

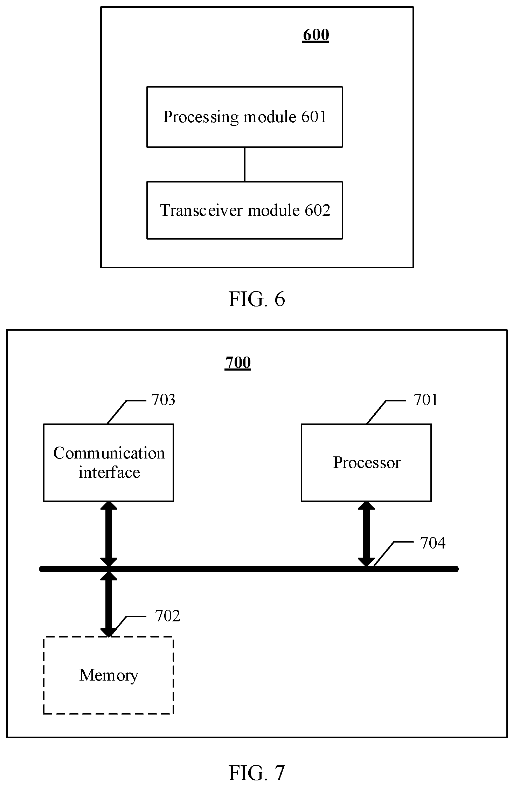

For example, refer to FIG. 6. The apparatus 600 may include a processing module 601 and a transceiver module 602.

When the apparatus 600 is configured to implement the method in the embodiment shown in FIG. 4, the processing module 601 is configured to: generate a time domain ZC sequence; generate a first frequency domain pilot sequence based on the time domain ZC sequence; perform subcarrier mapping on the first frequency domain pilot sequence to obtain a first frequency domain pilot signal; and perform inverse Fourier transform on the first frequency domain pilot signal to obtain a first time domain pilot signal; and the transceiver module 602 is configured to send the first time domain pilot signal. A root q of the time domain ZC sequence satisfies a first constraint condition, and the first constraint condition includes: An absolute value of q is less than or equal to a threshold, the threshold is less than $N_{ZC} - u$, $N_{ZC}$ is a length of the time domain ZC sequence, and u is a positive integer.

When the apparatus 600 is configured to implement the method in the embodiment shown in FIG. 5, the processing module 601 is configured to: generate a frequency domain ZC sequence; generate a second frequency domain pilot sequence based on the frequency domain ZC sequence; perform subcarrier mapping on the second frequency domain pilot sequence to obtain a second frequency domain pilot signal; and perform inverse Fourier transform on the second frequency domain pilot signal to obtain a third time domain pilot signal; and the transceiver module 602 is configured to send the third time domain pilot signal. A root q of the frequency domain ZC sequence satisfies a fourth constraint condition, and the fourth constraint condition includes: An absolute value of q enables an absolute value of $\gamma$ to be less than or equal to a threshold, $\gamma$ and q satisfy: $\gamma q = \delta N_{ZC} - 1$, $\delta$ is an integer, the threshold is less than $N_{ZC} - u$, $N_{ZC}$ is a length of the frequency domain ZC sequence, and u is a positive integer.

It should be understood that all related content of the steps in the foregoing method embodiment may be referenced to function descriptions of corresponding functional modules. Details are not described herein again.

Based on a same technical idea, refer to FIG. 7. An embodiment of this application further provides a communication apparatus 700, including:
at least one processor 701 and a communication interface 703 that is communicatively connected to the at least one processor 701, where the at least one processor 701 executes instructions stored in the memory 702, to enable the apparatus to perform, by using the communication interface 703, the method steps performed by the network device in the embodiment shown in FIG. 5.

Optionally, the memory 702 is located outside the apparatus 700.

Optionally, the apparatus 700 includes the memory 702, the memory 702 is connected to the at least one processor 701, and the memory 702 stores instructions that can be executed by the at least one processor 701. In FIG. 7, a dashed line indicates that the memory 702 is optional for the apparatus 700.

The processor 701 and the memory 702 may be coupled through an interface circuit, or may be integrated together. This is not limited herein.

A specific connection medium between the processor 701, the memory 702, and the communication interface 703 is not limited in this embodiment of this application. In this embodiment of this application, the processor 701, the memory 702, and the communication interface 703 are connected through a bus 704 in FIG. 7. The bus is represented by using a bold line in FIG. 7. A connection manner between other components is merely an example for description, and is not limited thereto. The bus may be classified into an address bus, a data bus, a control bus, and the like. For ease of representation, only one bold line is used for representation in FIG. 7, but this does not mean that there is only one bus or only one type of bus.

A specific connection medium between the processor 701, the memory 702, and the communication interface 703 is not limited in this embodiment of this application. In this embodiment of this application, the processor 701, the memory 702, and the communication interface 703 are connected through a bus 704 in FIG. 7. The bus is represented by using a bold line in FIG. 7. A connection manner between other components is merely an example for description, and is not limited thereto. The bus may be classified into an address bus, a data bus, a control bus, and the like. For ease of representation, only one bold line is used for representation in FIG. 7, but this does not mean that there is only one bus or only one type of bus.

It should be understood that the processor mentioned in this embodiment of this application may be implemented by using hardware or by software. When the processor is implemented by using hardware, the processor may be a logic circuit, an integrated circuit, or the like. When the processor is implemented by using software, the processor may be a general-purpose processor, and is implemented by reading software code stored in the memory.

For example, the processor may be a central processing unit (Central Processing Unit, CPU), or may be another general-purpose processor, a digital signal processor (Digital Signal Processor, DSP), an application-specific integrated circuit (Application-Specific Integrated Circuit, ASIC), a field programmable gate array (Field Programmable Gate Array, FPGA) or another programmable logic device, a discrete gate or a transistor logic device, a discrete hardware component, or the like. The general-purpose processor may be a microprocessor, or the processor may be any conventional processor or the like.

It should be understood that the memory mentioned in this embodiment of this application may be a volatile memory or a non-volatile memory, or may include both a volatile memory and a non-volatile memory. The non-volatile memory may be a read-only memory (Read-Only Memory, ROM), a programmable read-only memory (Programmable ROM, PROM), an erasable programmable read-only memory (Erasable PROM, EPROM), an electrically erasable programmable read-only memory (Electrically EPROM, EEPROM), or a flash memory. The volatile memory may be a random access memory (Random Access Memory, RAM), used as an external cache. By way of example and not limitation, RAMs in many forms may be used, for example, a static random access memory (Static RAM, SRAM), a dynamic random access memory (Dynamic RAM, DRAM), a synchronous dynamic random access memory (Synchronous DRAM, SDRAM), a double data rate synchronous dynamic random access memory (Double Data Rate SDRAM, DDR SDRAM), an enhanced synchronous dynamic random access memory (Enhanced SDRAM, ESDRAM), a synchlink dynamic random access memory (Synchlink DRAM, SLDRAM), and a direct rambus random access memory (Direct Rambus RAM, DR RAM).

It should be noted that when the processor is a general-purpose processor, a DSP, an ASIC, an FPGA or another programmable logic device, a discrete gate or a transistor logic device, or a discrete hardware component, the memory (storage module) may be integrated into the processor.

It should be noted that the memory described in this specification aims to include but is not limited to these memories and any memory of another proper type.

Based on a same technical idea, an embodiment of this application further provides a computer-readable storage medium, including a program or instructions. When the program or the instructions are run on a computer, the method shown in FIG. 4 or FIG. 5 is performed.

Based on a same technical idea, an embodiment of this application further provides a computer program product, including instructions. When the instructions are run on a computer, the method shown in FIG. 4 or FIG. 5 is performed.

All related content of the steps in the foregoing method embodiment may be referenced to function descriptions of corresponding functional modules. Details are not described herein again.

A person skilled in the art should understand that embodiments of this application may be provided as a method, a system, or a computer program product. Therefore, this application may use a form of hardware only embodiments, software only embodiments, or embodiments with a combination of software and hardware. In addition, this application may use a form of a computer program product that is implemented on one or more computer-usable storage media (including but not limited to a disk memory, a CD-ROM, an optical memory, and the like) that include computer-usable program code.

This application is described with reference to the flowcharts and/or block diagrams of the method, the device (system), and the computer program product according to this application. It should be understood that computer program instructions may be used to implement each process and/or each block in the flowcharts and/or the block diagrams and a combination of a process and/or a block in the flowcharts and/or the block diagrams. These computer program instructions may be provided for a general-purpose computer, a dedicated computer, an embedded processor, or a processor of any other programmable data processing device to generate a machine, so that the instructions executed by a computer or a processor of any other programmable data processing device generate an apparatus for implementing a specific function in one or more processes in the flowcharts and/or in one or more blocks in the block diagrams.

These computer program instructions may be stored in a computer-readable memory that can instruct the computer or any other programmable data processing device to work in a specific manner, so that the instructions stored in the computer-readable memory generate an artifact that includes an instruction apparatus. The instruction apparatus implements a specific function in one or more processes in the flowcharts and/or in one or more blocks in the block diagrams.

The computer program instructions may alternatively be loaded onto a computer or another programmable data processing device, so that a series of operations and steps are performed on the computer or the another programmable device, so that computer-implemented processing is generated. Therefore, the instructions executed on the computer or the another programmable device provide steps for implementing a specific function in one or more procedures in the flowcharts and/or in one or more blocks in the block diagrams.

It is clear that a person skilled in the art can make various modifications and variations to this application without departing from the protection scope of this application. This application is intended to cover these modifications and variations of this application provided that they fall within the scope of protection defined by the following claims and their equivalent technologies.

**Claims**

1. A signal transmission method, comprising:

   generating a time domain ZC sequence;
   generating a first frequency domain pilot sequence based on the time domain ZC sequence;
   performing subcarrier mapping on the first frequency domain pilot sequence to obtain a first frequency domain pilot signal;
   performing inverse Fourier transform on the first frequency domain pilot signal to obtain a first time domain pilot signal; and
   sending the first time domain pilot signal, wherein
   a root q of the time domain ZC sequence satisfies a first constraint condition, and the first constraint condition comprises: an absolute value of q is less than or equal to a threshold, wherein the threshold is less than $N_{ZC} - u$, $N_{ZC}$ is a length of the time domain ZC sequence, and u is a positive integer.

2. The method according to claim 1, wherein the first constraint condition comprises:

   the absolute value of q is less than or equal to $T_q$, or the absolute value of q is a positive integer less than $T_q$, and $T_q$ is the threshold; or
   absolute values of q are first $M_q$ smallest values in a set of absolute values of optional q, and an absolute value of $M_q^{th}$ optional q in the set is the threshold, wherein optional q and $N_{ZC}$ are relatively prime.

3. The method according to claim 2, wherein a value of $T_q$ or $M_q$ is related to at least one of the following:

   a quantity $N_d$ of subcarriers comprised in a transmission bandwidth;
   a quantity N of subcarriers corresponding to the first frequency domain pilot signal; and
   a maximum value $T_z$ of a subcarrier mapping spacing z.

4. The method according to claim 3, wherein

   a larger value of $N_d$ indicates a larger value of $T_q$ or $M_q$; or
   a larger value of N indicates a larger value of $T_q$ or $M_q$; or
   a larger value of $T_z$ indicates a smaller value of $T_q$ or $M_q$.

5. The method according to any one of claims 1 to 4, wherein the length $N_{ZC}$ of the time domain ZC sequence satisfies a second constraint condition, and the second constraint condition comprises:

$$N_{ZC} = N = \frac{N_d}{z};$$

or

$$N_{ZC} = N = \frac{N_d}{z} - 1;$$

or

$N_{ZC}$ is a maximum value in all possible values that are less than or equal to N and that enable a quantity of values of optional q to be $\tilde{M}_q$, wherein $\tilde{M}_q$ is a positive integer, and $N = \frac{N_d}{z}$ ; or

$N_{ZC}$ is a maximum value in all possible values that are less than or equal to $\frac{N_d}{z}$ and that enable a quantity of values of optional q to be $\tilde{M}_q$, wherein $N_{ZC} = N$, and $\tilde{M}_q$ is a positive integer, wherein
N is the quantity of subcarriers corresponding to the first frequency domain pilot signal, $N_d$ is the quantity of subcarriers comprised in the transmission bandwidth, and z is the subcarrier mapping spacing.

6. The method according to any one of claims 1 to 5, wherein the performing subcarrier mapping on the first frequency domain pilot sequence comprises:

performing subcarrier mapping on the first frequency domain pilot sequence based on the subcarrier mapping spacing z, wherein
z satisfies a third constraint condition, and the third constraint condition comprises:
z is less than or equal to $T_z$, or z is a positive integer less than $T_z$.

7. The method according to claim 6, wherein a value of $T_z$ is related to at least one of the following:

the quantity $N_d$ of subcarriers comprised in the transmission bandwidth; and
the absolute value of the root q of the time domain ZC sequence.

8. The method according to claim 7, wherein

a larger value of $N_d$ indicates a larger value of $T_z$; or
a larger value of q indicates a smaller value of $T_z$.

9. The method according to any one of claims 1 to 8, further comprising:

receiving a second time domain pilot signal, wherein the second time domain pilot signal is a signal obtained by transmitting the first time domain pilot signal through a channel; and
determining a distance and/or a speed of a target based on the first time domain pilot signal and the second time domain pilot signal.

10. A signal transmission method, comprising:

generating a frequency domain ZC sequence;
generating a second frequency domain pilot sequence based on the frequency domain ZC sequence;
performing subcarrier mapping on the second frequency domain pilot sequence to obtain a second frequency domain pilot signal;
performing inverse Fourier transform on the second frequency domain pilot signal to obtain a third time domain pilot signal; and
sending the third time domain pilot signal, wherein
a root q of the frequency domain ZC sequence satisfies a fourth constraint condition, and the fourth constraint condition comprises: an absolute value of q enables an absolute value of $\gamma$ to be less than or equal to a threshold, wherein $\gamma$ and q satisfy: $\gamma q = \delta N_{ZC} - 1$, $\delta$ is an integer, the threshold is less than $N_{ZC} - u$, $N_{ZC}$ is a length of the frequency domain ZC sequence, and u is a positive integer.

11. The method according to claim 10, wherein $\gamma$ is a root of a ZC sequence obtained by performing inverse Fourier transform on the frequency domain ZC sequence.

12. The method according to claim 10 or 11, wherein the fourth constraint condition comprises:

q enables the absolute value of $\gamma$ to be less than or equal to $T_q$, or q is an integer that enables the absolute value of $\gamma$ to be less than $T_q$, and $T_q$ is the threshold; or
q are first $M_q$ values that are in a set of optional q and that enable the absolute value of $\gamma$ to be smallest, an absolute value of $\gamma$ corresponding to $M_q{}^{th}$ optional q is the threshold, and the absolute value of $\gamma$ corresponding to $M_q{}^{th}$ optional q in the set is the threshold, wherein optional q and $N_{ZC}$ are relatively prime.

13. The method according to claim 12, wherein a value of $T_q$ or $M_q$ is related to at least one of the following:

a quantity $N_d$ of subcarriers comprised in a transmission bandwidth;
a quantity N of subcarriers corresponding to the second frequency domain pilot signal; and
a maximum value $T_z$ of a subcarrier mapping spacing z.

14. The method according to claim 13, wherein

a larger value of $N_d$ indicates a larger value of $T_q$ or $M_q$; or
a larger value of N indicates a larger value of $T_q$ or $M_q$; or
a larger value of $T_z$ indicates a smaller value of $T_q$ or $M_q$.

15. The method according to any one of claims 10 to 14, wherein the length $N_{ZC}$ of the frequency domain ZC sequence satisfies a fifth constraint condition; and

the fifth constraint condition comprises:

$$N_{ZC} = N = \frac{N_d}{z};$$

or

$$N_{ZC} = N = \frac{N_d}{z} - 1;$$

or
$N_{ZC}$ is a maximum value in all possible values that are less than or equal to N and that enable a quantity of values of optional q to be $\tilde{M}_q$, wherein $\tilde{M}_q$ is a positive integer, and $N = \frac{N_d}{z}$ ; or

$N_{ZC}$ is a maximum value in all possible values that are less than or equal to $\frac{N_d}{z}$ and that enable a quantity of values of optional q to be $\tilde{M}_q$, wherein $N_{ZC} = N$, and $\tilde{M}_q$ is a positive integer, wherein
N is the quantity of subcarriers corresponding to the second frequency domain pilot signal, $N_d$ is the quantity of subcarriers comprised in the transmission bandwidth, and z is the subcarrier mapping spacing.

16. The method according to any one of claims 11 to 15, wherein the performing subcarrier mapping on the second frequency domain pilot sequence comprises:

performing subcarrier mapping on the second frequency domain pilot sequence based on the subcarrier mapping spacing z, wherein
z satisfies a sixth constraint condition, and the sixth constraint condition comprises:
z is less than or equal to $T_z$, or z is a positive integer less than $T_z$, and $T_z$ is the threshold.

**17.** The method according to claim 16, wherein a value of $T_z$ is related to at least one of the following:

the quantity $N_d$ of subcarriers comprised in the transmission bandwidth;
the root q of the frequency domain ZC sequence; and
an absolute value of $d_{-1}$.

**18.** The method according to claim 17, wherein

a larger value of $N_d$ indicates a larger value of $T_z$; or
a larger value of $\gamma$ indicates a smaller value of $T_z$.

**19.** The method according to any one of claims 10 to 18, wherein the method further comprises:

receiving a fourth time domain pilot signal, wherein the fourth time domain pilot signal is a signal obtained by transmitting the third time domain pilot signal through a channel; and
determining a distance and/or a speed of a target based on the third time domain pilot signal and the fourth time domain pilot signal.

**20.** A communication apparatus, comprising:

a processing module, configured to: generate a time domain ZC sequence; generate a first frequency domain pilot sequence based on the time domain ZC sequence; perform subcarrier mapping on the first frequency domain pilot sequence to obtain a first frequency domain pilot signal; and perform inverse Fourier transform on the first frequency domain pilot signal to obtain a first time domain pilot signal; and
a transceiver module, configured to send the first time domain pilot signal, wherein
a root q of the time domain ZC sequence satisfies a first constraint condition, and the first constraint condition comprises: an absolute value of q is less than or equal to a threshold, wherein the threshold is less than $N_{ZC}$ - u, $N_{ZC}$ is a length of the time domain ZC sequence, and u is a positive integer.

**21.** The apparatus according to claim 20, wherein the length $N_{ZC}$ of the time domain ZC sequence satisfies a second constraint condition, and the second constraint condition comprises:

$$N_{ZC} = N = \frac{N_d}{z};$$

or

$$N_{ZC} = N = \frac{N_d}{z} - 1;$$

or

$N_{ZC}$ is a maximum value in all possible values that are less than or equal to N and that enable a quantity of values of optional q to be $\tilde{M}_q$, wherein $\tilde{M}_q$ is a positive integer, and $N = \frac{N_d}{z}$ ; or

$N_{ZC}$ is a maximum value in all possible values that are less than or equal to $\frac{N_d}{z}$ and that enable a quantity of values of optional q to be $\tilde{M}_q$, wherein $N_{ZC} = N$, and $\tilde{M}_q$ is a positive integer, wherein
N is a quantity of subcarriers corresponding to the first frequency domain pilot signal, $N_d$ is a quantity of subcarriers comprised in a transmission bandwidth, and z is a subcarrier mapping spacing.

**22.** The apparatus according to claim 20 or 21, wherein the processing module is configured to perform subcarrier mapping on the first frequency domain pilot sequence based on the subcarrier mapping spacing z, wherein
z satisfies a third constraint condition, and the third constraint condition comprises:
z is less than or equal to $T_z$, or z is a positive integer less than $T_z$.

**23.** The apparatus according to any one of claims 20 to 22, wherein

the transceiver module is further configured to receive a second time domain pilot signal, wherein the second time domain pilot signal is a signal obtained by transmitting the first time domain pilot signal through a channel; and the processing module is further configured to determine a distance and/or a speed of a target based on the first time domain pilot signal and the second time domain pilot signal.

24. A communication apparatus, comprising:

a processing module, configured to generate a frequency domain ZC sequence; generate a second frequency domain pilot sequence based on the frequency domain ZC sequence; perform subcarrier mapping on the second frequency domain pilot sequence to obtain a second frequency domain pilot signal; and perform inverse Fourier transform on the second frequency domain pilot signal to obtain a third time domain pilot signal; and
a transceiver module, configured to send the third time domain pilot signal, wherein
a root q of the frequency domain ZC sequence satisfies a fourth constraint condition, and the fourth constraint condition comprises: an absolute value of q enables an absolute value of $\gamma$ to be less than or equal to a threshold, wherein $\gamma$ and q satisfy: $\gamma q = \delta N_{ZC} - 1$, $\delta$ is an integer, the threshold is less than $N_{ZC} - u$, $N_{ZC}$ is a length of the frequency domain ZC sequence, and u is a positive integer.

25. The apparatus according to claim 24, wherein the length $N_{ZC}$ of the frequency domain ZC sequence satisfies a fifth constraint condition; and

the fifth constraint condition comprises:

$$N_{ZC} = N = \frac{N_d}{z};$$

or

$$N_{ZC} = N = \frac{N_d}{z} - 1;$$

or

$N_{ZC}$ is a maximum value in all possible values that are less than or equal to N and that enable a quantity of values of optional q to be $\tilde{M}_q$, wherein $\tilde{M}_q$ is a positive integer, and $N = \frac{N_d}{z}$; or

$N_{ZC}$ is a maximum value in all possible values that are less than or equal to $\frac{N_d}{z}$ and that enable a quantity of values of optional q to be $\tilde{M}_q$, wherein $N_{ZC} = N$, and $\tilde{M}_q$ is a positive integer, wherein
N is a quantity of subcarriers corresponding to the second frequency domain pilot signal, $N_d$ is a quantity of subcarriers comprised in a transmission bandwidth, and z is a subcarrier mapping spacing.

26. The apparatus according to claim 24 or 25, wherein the processing module is configured to perform subcarrier mapping on the second frequency domain pilot sequence based on the subcarrier mapping spacing z, wherein z satisfies a sixth constraint condition, and the sixth constraint condition comprises:
z is less than or equal to $T_z$, or z is a positive integer less than $T_z$, and $T_z$ is the threshold.

27. The apparatus according to any one of claims 24 to 26, further comprising:

receiving a fourth time domain pilot signal, wherein the fourth time domain pilot signal is a signal obtained by transmitting the third time domain pilot signal through a channel; and
determining a distance and/or a speed of a target based on the third time domain pilot signal and the fourth time domain pilot signal.

28. A communication apparatus, comprising a processor and an interface circuit, wherein the interface circuit is electrically coupled to the processor, and the processor performs, by using a logic circuit or by executing code instructions, the method according to any one of claims 1 to 9 or the method according to any one of claims 10 to 19.

29. A computer-readable storage medium, wherein the storage medium stores a computer program or instructions, and when the computer program or the instructions are executed by a computer, the method according to any one of claims 1 to 9 or the method according to any one of claims 10 to 19 is performed.

FIG. 1

FIG. 2

Terminal

Satellite

FIG. 3A

| Satellite 1 | | Satellite 2 |
|---|---|---|

Communication module → Transceiver antenna

APT module → APT transmit/ receive

⟺ Channel

Transceiver antenna ← Communication module

APT transmit/ receive ← APT module

FIG. 3B

(a)                    (b)

FIG. 3C

S401

Generate a time domain ZC sequence

S402

Generate a first frequency domain pilot sequence based on the time domain ZC sequence

S403

Perform subcarrier mapping on the first frequency domain pilot sequence to obtain a first frequency domain pilot signal

S404

Perform inverse Fourier transform on the first frequency domain pilot signal to obtain a first time domain pilot signal

S405

Send the first time domain pilot signal

FIG. 4

S501

Generate a frequency domain ZC sequence

S502

Generate a second frequency domain pilot sequence based on the frequency domain ZC sequence

S503

Perform subcarrier mapping on the second frequency domain pilot sequence to obtain a second frequency domain pilot signal

S504

Perform inverse Fourier transform on the second frequency domain pilot signal to obtain a third time domain pilot signal

S505

Send the third time domain pilot signal

FIG. 5

**600**

Processing module 601

Transceiver module 602

FIG. 6

**700**

703

Communication interface

701

Processor

704

702

Memory

FIG. 7

### INTERNATIONAL SEARCH REPORT

| International application No. |
| --- |
| **PCT/CN2022/124630** |

| **A.** | **CLASSIFICATION OF SUBJECT MATTER** |
| --- | --- |

H04L27/26(2006.01)i

According to International Patent Classification (IPC) or to both national classification and IPC

| **B.** | **FIELDS SEARCHED** |
| --- | --- |

Minimum documentation searched (classification system followed by classification symbols)

IPC: H04L; H04W

Documentation searched other than minimum documentation to the extent that such documents are included in the fields searched

Electronic data base consulted during the international search (name of data base and, where practicable, search terms used)

CNKI, CNTXT, ENTXT, ENTXTC, 3GPP: 时域, 频域, 导频, 前导, 子载波, 映射, 根, 小于, 长度, 啁啾, time domain, frequency domain, pilot, preamble, subcarrier, mapping, root, smaller, length, chirp, ZC, zadoff-chu, chu, FZC

| **C.** | **DOCUMENTS CONSIDERED TO BE RELEVANT** |
| --- | --- |

| Category* | Citation of document, with indication, where appropriate, of the relevant passages | Relevant to claim No. |
| --- | --- | --- |
| Y | CN 103929825 A (UNIVERSITY OF ELECTRONIC SCIENCE AND TECHNOLOGY OF CHINA) 16 July 2014 (2014-07-16)<br>description, paragraphs 0002-0082 | 1-9, 20-23, 28-29 |
| Y | CN 106506133 A (SOUTHEAST UNIVERSITY) 15 March 2017 (2017-03-15)<br>description, paragraphs 0002-0185 | 1-9, 20-23, 28-29 |
| Y | US 2008095254 A1 (MUHAREMOVIC, T. et al.) 24 April 2008 (2008-04-24)<br>description, paragraphs 0002-0037 | 1-9, 20-23, 28-29 |
| A | CN 106230543 A (JIANGSU ZTE WAVETONE SCINECE & TECHNOLOGY LTD.) 14 December 2016 (2016-12-14)<br>description, paragraphs 0002-0077 | 10-19, 24-29 |
| A | PANASONIC et al. "Random access sequence comparison for E-UTRA"<br>*TSG-RAN WG1 Meeting #46, R1-062174*, 01 September 2006 (2006-09-01),<br>entire document | 1-29 |

☐ Further documents are listed in the continuation of Box C.　☑ See patent family annex.

| * | Special categories of cited documents: | "T" | later document published after the international filing date or priority date and not in conflict with the application but cited to understand the principle or theory underlying the invention |
| --- | --- | --- | --- |
| "A" | document defining the general state of the art which is not considered to be of particular relevance | | |
| "D" | document cited by the applicant in the international application | "X" | document of particular relevance; the claimed invention cannot be considered novel or cannot be considered to involve an inventive step when the document is taken alone |
| "E" | earlier application or patent but published on or after the international filing date | | |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | "&" | document member of the same patent family |
| "P" | document published prior to the international filing date but later than the priority date claimed | | |

| Date of the actual completion of the international search | Date of mailing of the international search report |
| --- | --- |
| **13 June 2023** | **21 June 2023** |

| Name and mailing address of the ISA/CN | Authorized officer |
| --- | --- |
| **China National Intellectual Property Administration (ISA/ CN)**<br>**China No. 6, Xitucheng Road, Jimenqiao, Haidian District, Beijing 100088** | |
| | Telephone No. |

Form PCT/ISA/210 (second sheet) (July 2022)

**INTERNATIONAL SEARCH REPORT**
Information on patent family members

International application No.

**PCT/CN2022/124630**

| Patent document cited in search report | | | Publication date (day/month/year) | Patent family member(s) | | | Publication date (day/month/year) |
|---|---|---|---|---|---|---|---|
| CN | 103929825 | A | 16 July 2014 | None | | | |
| CN | 106506133 | A | 15 March 2017 | None | | | |
| US | 2008095254 | A1 | 24 April 2008 | WO | 2008052041 | A2 | 02 May 2008 |
| CN | 106230543 | A | 14 December 2016 | None | | | |

Form PCT/ISA/210 (patent family annex) (July 2022)